# EUROPEAN PATENT APPLICATION

(11) **EP 1 148 350 A1**
(43) Date of publication of application: **24.10.2001**
(21) Application number: 00201375.3
(22) Date of filing: 18.04.2000
(51) Int. Cl.: G01V 1/20, C10M 105/34

(54) **Ballast fluid for seismic streamers**

(71) Applicant: ATOFINA Research, 7181 Seneffe (Feluy) (BE)
(72) Inventor: Janssen, Michel, 1970 Wezembeek-Oppen (BE); Demoulin, André, 5998 Beauvechain (BE)

(57) **Abstract**

This invention concerns a ballast fluid composition consisting essentially of:
a) from 1 to 85 % by weight of a monoester prepared by reacting a monoacid and a monoalcohol;
b) from 15 to 99 % by weight of an alpha-olefin said ballast fluid having a density ranging from 765 to 850 kg/m³, a pour point of less than -15 °C and a flash point of at least 100 °C.

## Description

This invention relates to a non-polluting and environmentally non-hasardous ballast fluid which can be used to maintain cables and streamers of the type towable by a marine vessel, at a known predetermined depth below the sea surface.

Several techniques have been developed to automatically maintain a streamer or cable at a predetermined depth in a fluid medium.

They can be organised in two categories:
- mechanical means to lift or sink the cable;
- physical means to adjust the density of the ballast fluid by adding extra ingredients.

In the first class of systems or mechanical systems, several patents can be found such as US-A-4,549,459 that discloses a flotation apparatus wherein a buoy for maintaining the near surface position of marine equipment is mounted on a hydrodynamically advantageous V-shaped frame to reduce frictional drag associated with towing surface equipment. US-A-3,961,303 and US-A-3,943,483 both describe depth controller devices having a streamlined body that comprises lift producing means, such as a main pair of vanes that can produce a variable negative lift and an auxiliary pair of vanes that can produce a variable positive lift. All these systems offer the disadvantage of requiring delicate mechanical arrangements.

Several patents can be grouped under the second class of systems or physical systems. US-A-3,436,776 discloses a device for maintaining a body at a predetermined depth in a fluid medium. The device, which is secured to the body, includes a pressure sensitive valve which operates in response to pressure changes due to changes in depth in the medium.

The valve controls the flow of a gas to or from an inflatable bag that expands or contracts depending on the quantity of gas contained therein and displaces an amount of fluid that causes the body and the device to rise or sink. When a predetermined depth is reached for which the valve is adjusted, the valve operates to shut off further gas from entering or leaving the bag, causing the body and the device to remain at the predetermined depth. US-A-3,909,774 discloses a system for controlling the buoyancy of an elongated, expansible, flexible liquid-filled, marine seismic detection streamer by providing a pressure sensing switch assembly within the submerged streamer. Said switch includes a pressure sensing element, exposed to the water pressure at the streamer depth, and electrical contacts for operating an inlet valve and an exhaust valve upon upward or downward deviation of the streamer depth from a predetermined depth. Said valves admit additional quantities of a buoyancy control liquid from a supply line to the streamer to increase buoyancy or discharge the control liquid from the streamer for decreasing buoyancy. These methods offer the disadvantage of requiring complex electronic equipment for monitoring the depth and triggering the adequate adjustment to the density change. They further require that a supply of gas or light fluid be carried along for carrying out the necessary density adjustment. In addition, all these systems use isoparaffins as ballast fluid and therefore present two major disadvantages:
- pollution in case of leakage;
- explosion and/or fire hazard caused by the low flash point typically of 60 °C.

It is thus highly desirable to provide a system that is simple to construct and to operate, and that is also safe for the environment. It is also desirable that the system be fit for use in marine seismic acquisition, i.e. it must generate little noise, be non corrosive for the seismic streamers, and be characterised by a high flash point and low pour point.

In accordance with the present invention, there is provided a composition, to be used as a ballast fluid for maintaining a cable or streamer, of the type to be towed by a vessel, at a constant predetermined depth, such composition consisting essentially of one or more monoesters and one or more alpha-olefins.

It is an advantage of this ballast fluid to be non-polluting and environmentally safe.

It is another advantage of the present invention to provide a ballast fluid with properties such as pour point, viscosity, flash point in a desired range by selecting specific monoesters or combination thereof.

It is also an advantage of the ballast fluid of the present invention to create a very low noise level that does not interfere with seismic recording.

It is a further advantage of the ballast fluid of the present invention to be non-corrosive for the streamers or cables.

The present invention discloses a ballast fluid composition consisting essentially of:
a) from 1 to 85 % by weight of a monoester or mixture of monoesters prepared by reacting a monoacid and a monoalcohol;
b) from 99 to 15 % by weight of one or more alpha-olefins
said ballast fluid having a density ranging from 765 to 850 kg/m³, a pour point of less than -15 °C and a flash point of at least 90 °C.

Preferably the compositions consists of from 15 to 50 % by weight of monoester and from 50 to 85 % by weight of alpha-olefins, more preferably of 20 to 30 % by weight of monoester and from 70 to 80 % by weight of alpha-olefins.

The monoesters of this invention are preferably esters of natural fatty acids; they result from the reaction of monocarboxylic acids wih monofunctional alcohols.

The monocarboxylic acids can be linear or branched chains of from 8 to 24 carbon atoms, preferably from 14 to 20 carbon atoms, and they can have from 1 to 3 unsaturations. They are preferably selected from the group consisting of oleic, linoleic, palmitic, palmitoleic, myristic acid and mixtures thereof.

The monofunctional alcohols can be linear or branched chains of from 1 to 12 carbon atoms, preferably from 4 to 10 carbon atom and most preferably of 8 carbon atoms.

The monocarboxylic acids can be either saturated and have preferably from 8 to 16 carbon atoms or they can be unsaturated and have preferably from 16 to 24 carbon atoms. The unsaturated monoesters are preferred because they give the possibility to increase the chain length and thus lower the overall density of the composition while retaining a low pour point.

The monoesters used in the present invention have a very high flash point of at least 150 °C, as measured using the procedure of ASTM D 92 standard method, a pour point of at most -15 °C, as measured using the procedures of the ASTM D 2500 standard mehod, they have a density of from 830 to 870 kg/m³ as measured using the procedures of the DIN 51757 standard method at 25 °C and they have a viscosity of 1 to 5 10⁻⁶ m²/s at 40 °C as measured using the procedures of the ASTM D 445 standard method.

The alpha olefins used in the composition of this invention contain from 8 to 18 carbon atoms and preferably from 12 to 16 carbon atoms.

Preferably, the alpha-olefins used in the present composition contain from 60 to 84 % by weight of C12, from 16 to 40 % by weight of C14 and from 1 to 5 % by weight of C16. They have a density at 20 °C of about 760 kg/m³, a pour point of about -35 °C and a flash point of about 80 °C, depending upon the mixture of alpha-olefins selected for the preparation.

The weight ratio of monoesters to alpha-olefins is varied in order to obtain the desired properties of density, flash point and pour point for the ballast fluid. The desired properties depend upon the sea conditions, such as salinity and temperature, and upon the climate of the geographical area where the streamer is to be towed.

As the composition according to the present invention is used in marine seismic streamers, it is desired that the fluid-filled cables generate as little noise as possible, when being towed behind a seismic vessel. It has been observed that the cables filled with the fluid of the present invention exhibit a lower noise level than cables filled with traditional fluid.

No particular type of unusual corrosion or swelling have been detected in the cables filled with the ballast fluid of the present invention.

The composition of the present invention could be used to fill any submersible device in order to control its floatability.

### Example 1.

The monoester mixture used in the present invention was prepared from 2-ethyl hexyl alcohol and had 2-ethyl hexyl oleate as major component. It had the following composition and properties:
- acid index: <1 mg KOH/g as measured using the techniques of the standard method AOCS Te-2a-64
- viscosity: 8 mm²/s at 40 °C (ASTM D 445 standard method)
- flash point: > 150 °C (ASTM D 92 standard method)
- pour point: < -20 °C (ASTM D 2500 standard method)
- density: 865 kg/m³ at 20 °C (DIN 51757 standard method)
- monoester composition:

| acid type | % by weight |
|---|---|
| C8 | <0.1 |
| C10 | <0.1 |
| C12 | 0.1 |
| C14 | 1.31 |
| C14:1 | 0.3 |
| C15 | 0.1 |
| C16 | 12.24 |
| C16:1 | 3.33 |
| C17 | 0.4 |
| C17:1 | 0.5 |
| C18 | 5.15 |
| C18:1 | 62.95 |
| C18:2 | 10.72 |
| C18:3 | 0.9 |
| C20 | 0.6 |
| C20:1 | 0.5 |
| C22 | 0.5 |
| residual 2-ethyl-hexanol | 0.2 |

In this list of acids, the symbols ":1", ":2" and ":3" mean respectively that the component has one, two or three unsaturations.

These monoesters have been tested for biodegradability and show 85 % biodegradability after 28 days in a closed bottle standard method performed at the ECCA laboratory in Belgium. They have been tested for marine toxicity at the Environmental Enterprises (U.S.A.) and show that, for the 96 hours static definitive toxicity test (Mysid shrimps/ Mysidopsis Bahia), more than 1,000,000 ppm of the substance was necessary to kill 50 % of the living organisms(LC₅₀). The health and safety tests performed on various animal species at CIT (France) revealed no signs of irritation.

The alpha-olefins used in the present invention had the following composition and properties:
- viscosity: 1.5 mm²/s at 40 °C (ASTM D 445 standard method)
- flash point: 81 °C (ASTM D 92 standard method)
- pour point: -35 °C (ASTM D 2500 standard method)
- density: 764 kg/m³ at 20 °C (DIN 51757 standard method)
- alpha-olefin composition

| type | % by weight |
|---|---|
| C10 | 0.3 |
| C12 | 62.1 |
| C14 | 36.4 |
| C16 | 1.2 |

The ballast fluid was prepared by mixing 40 % by weight of the mixture of monoesters and 60 % by weight of the alpha-olefins, as described hereabove.

The resulting ballast fluid had the following desired properties:
- acid index: <1 mg KOH/g
- viscosity: 3.5 mm²/s at 40 °C (ASTM D 445 standard method)
- flash point: 92 °C (ASTM D 92 standard method)
- pour point: -36 °C (ASTM D 2500 standard method)
- density: 790 kg/m³ at 20 °C (DIN 51757 standard method)

### Example 2.

The ballast fluid composition of example 1 was tested in the North sea. It was loaded into three of the 48 sections of a 3600 metre long streamer of the type PUR AMG. The seismic vessel towed six streamers and travelled at a speed of 2.42 m/s (4.7 knots), heading North. The salinity of the water was of 35.1 g/l, the water temperature was of 13.3 °C, and the wind speed varied between 5 and 10 m/s (10 to 20 knots) with waves' height of from 0.5 to 1 m. The seismic streamers were stabilised at a depth of about 7 m.

The test was carried on all the sections of the six streamers and on several recordings.

The central traces of the sections filled with the ballast fluid of the present invention had a noise level about 3 µb (microbar) lower than that of the equivalent traces on other sections of the streamers (filled with conventional fluids). During the testing period, the wind speed was of about 5 m/s and the wave height of about 0.5 m. The external traces of each section are noisier; they had similar noise levels for both the conventional fluid and the fluid according to the present invention. No unusual ageing of the fluid or corrosion or swelling of the streamers was observed during the testing period that lasted two months.

## Claims

1. Ballast fluid composition consisting essentially of:
a) from 1 to 85 % by weight of a monoester or a mixture of monoesters prepared by reacting a monoacid and a monoalcohol;
b) from 99 to 15 by weight of one or more alpha-olefins said ballast fluid having a density ranging from 765 to 850 kg/m³, a pour point of less than -15 °C and a flash point of at least 90 °C.

2. The ballast fluid of claim 1, wherein the total amount of monoesters ranges from 15 to 50 % by weight, and the total amount of alpha-olefins ranges from 85 to 50 % by weight.

3. The ballast fluid of claim 1 or claim 2, wherein the monoester is prepared from a monoacid having from 8 to 24 carbon atoms, selected from linear monocarboxylic acids, branched monocarboxylic acids and mixtures thereof.

4. The ballast fluid of any one of the preceding claims, wherein the monoester is prepared from a linear or branched monofunctional alcohol having from 1 to 12 carbon atoms.

5. The ballast fluid of any one of the preceding claims, wherein the monoester is predominantly a monoester of one or more saturated monocarboxylic acids having from 8 to 16 carbon atoms or a monoester of one or more unsaturated monocarboxylic acids having from 16 to 24 carbon atoms.

6. Use of the composition according to any one of the preceding claims to fill a submersible device in order to control its floatability.

7. Streamer for marine seismic acquisition comprising as floating mechanism the ballast fluid of any one of claims 1 to 5.
